# EUROPÄISCHE PATENTSCHRIFT

(11) **EP 2 470 405 B1**
(45) Veröffentlichungstag und Bekanntmachung des Hinweises auf die Patenterteilung: **01.05.2013**
(21) Anmeldenummer: 10734977.1
(22) Anmeldetag: 16.07.2010
(51) Int. Cl.: B60W 20/00, B60W 30/18, B60K 6/48, B60W 10/06, B60W 10/08, B60W 10/10, B60W 10/30, B60W 10/26

(54) **VERFAHREN UND VORRICHTUNG ZUM BETREIBEN EINES HYBRIDANTRIEBES EINES FAHRZEUGES**
METHOD AND DEVICE FOR OPERATING A HYBRID DRIVE OF A VEHICLE
PROCÉDÉ ET DISPOSITIF POUR FAIRE FONCTIONNER UNE TRACTION HYBRIDE D'UN VÉHICULE

(30) Priorität: 25.08.2009 DE 102009028867
(43) Veröffentlichungstag der Anmeldung: 04.07.2012
(73) Patentinhaber: Robert Bosch GmbH, 70442 Stuttgart (DE)
(72) Erfinder: FASSNACHT, Jochen, 75365 Calw (DE)
(86) Internationale Anmeldenummer: PCT/EP2010/060312
(87) Internationale Veröffentlichungsnummer: WO 2011/023457

(56) Entgegenhaltungen:
- EP-A1- 1 920 986
- JP-A- 8 154 307
- US-A1- 2003 015 874
- US-A1- 2009 021 385

## Beschreibung

### Stand der Technik

Die Erfindung betrifft ein Verfahren zum Betreiben eines Hybridantriebes eines Fahrzeuges, bei welchem ein Verbrennungsmotor und/oder mindestens eine elektrische Maschine das Fahrzeug antreiben, wobei die elektrische Maschine von einem Energiespeicher mit Energie versorgt wird oder die elektrischen Maschine den Energiespeicher mit elektrischer Energie versorgt und ein Betriebspunkt des Hybridantriebes bei einer vorgegebenen Betriebsstrategie eingestellt wird, die von Optimierungsgrößen abhängt, welche den Kraftstoffverbrauch des Verbrennungsmotors und die von dem Energiespeicher zur Verfügung gestellte Energie berücksichtigen sowie eine Vorrichtung zur Durchführung des Verfahrens.

Fahrzeuge mit einer hybriden Antriebsstruktur weisen einen Verbrennungsmotor und als zweites Antriebsaggregat meistens mindestens eine elektrische Maschine auf. So kann das Antriebsmoment während des Fahrbetriebes des Hybridfahrzeuges von beiden Antriebsaggregaten aufgebracht werden. Die elektrische Maschine wird dabei beispielsweise in einem Boostbetrieb zur Erhöhung der Fahrdynamik mit einem hohen Drehmoment beaufschlagt, wohingegen bei einem normalen Fahrbetrieb der Verbrennungsmotor in günstigen Wirkungsgraden betrieben wird.

Diese Betriebsstrategien werden in ein Steuergerät des Hybridantriebes implementiert, so dass die Ansteuerung der elektrischen Maschine und/oder des Verbrennungsmotors je nach Anforderung verbrauchsoptimiert, leistungsoptimiert oder schadstoffoptimiert erfolgt.

Der elektrische Antrieb ist dabei mit einem Energiespeicher verbunden, der den elektrischen Antrieb mit elektrischer Energie versorgt. Befindet sich der Verbrennungsmotor im Schleppbetrieb, arbeitet der elektrische Antrieb generatorisch, wodurch dem Energiespeicher durch denselben Energie zugeführt wird. Dadurch wird der Energiespeicher wieder mit Energie geladen. Die dem Energiespeicher wieder zugeführte Energie wird auch als Rekuperationsenergie bezeichnet.

Aus der DE 10 2006 012 859 A1 ist eine Bremsstrategie für einen Hybridantrieb eines Fahrzeuges bekannt, bei welchem bei niedrigen geforderten Bremsmomenten ein energieoptimaler Betriebspunkt bestimmt wird, so dass sichergestellt wird, dass das vorliegende Rekuperationspotential optimal ausgenutzt wird. Um die energetisch günstigste Variante des Betriebes des Verbrennungsmotors einzustellen, wird in der Bremsstrategie ein Kostenvergleich für die Entnahme einer Energie zum Schleppen des Verbrennungsmotors und für die in den Energiespeicher eingespeiste Energie vorgenommen.

Aus der EP 1 920 986 A1 ist darüber hinaus ein Verfahren zum Betreiben eines Hybridantriebs eines Fahrzeugs bekannt, bei dem ein Betriebspunkt des Hybridantriebs bei einer vorgegebenen Betriebsstrategie in Abhängigkeit von den zu erwartenden Kosten, die beim Aufladen eines Energiespeichers des Hybridantriebs mittels einer externen Energiequelle erwartet werden, eingestellt wird.

### Offenbarung der Erfindung

Das erfindungsgemäße Verfahren zum Betreiben eines Hybridantriebes eines Fahrzeuges mit den Merkmalen des Anspruchs 1 weist dabei den Vorteil auf, dass die aus einem öffentlichen Stromnetz entnommene Energie als zusätzliche Energieart betrachtet wird und bei der Einstellung des günstigsten Betriebspunktes des Hybridantriebes mit berücksichtigt wird. Dadurch, dass dem Energiespeicher Energie aus einer externen Energiequelle zugeführt wird, wobei die durch die Zufuhr der Energie aus der externen Energiequelle in den Energiespeicher zu berücksichtigenden Minimierungsgrößen in der Betriebsstrategie bewertet werden, werden verschiedene Kostenfunktionsarten oder Kostenarten, welche als Minimierungsgrößen betrachtet werden, einzeln oder in Kombination bei der Ermittlung des optimalen Betriebspunktes des Hybridantriebes in einer vorgegebenen Fahrsituation des Fahrzeuges berücksichtigt. Die Minimierungsgrößen können auch als Optimierungsgrößen betrachtet werden.

Vorteilhafterweise berücksichtigen die Minimierungsgrößen ein Energieäquivalent und/oder ein CO2-Äquivalent und/oder ein Schadstoffäquivalent und/oder eine monetäre Einheit. Bei einem CO₂-Äquivalent wird die in einem Betriebspunkt erzeugte Menge an CO₂ pro Kilowattstunde in Abhängigkeit von der geladenen

Energiemenge bestimmt. Alternativ wird die aus dem externen Stromnetz entnommene Gesamtenergiemenge betrachtet. Somit ist in jeder Betriebssituation des Hybridantriebes bekannt, welchen CO₂-Ausstoß das Fahrzeug erzeugt.

Dasselbe gilt für das Schadstoffäquivalent, welches den vom Hybridantrieb in einem bestimmten Betriebspunkt erzeugten und ausgestoßenen Schadstoff pro Kilowattstunde und pro geladener Energiemenge angibt. Es reicht auch aus, wenn der Betriebsstrategie bei der Ermittlung des günstigsten Arbeitspunktes des Hybridantriebes ein Äquivalent für eine dem Stromnetz entnommene Gesamtenergiemenge bekannt ist, was beispielsweise die Ladung bei bekannter Spannung sein kann. Aber auch monetäre Kosten, wie Geld für eine Kilowattstunde und geladener Energiemenge oder für die aus dem Stromnetz entnommene Gesamtenergiemenge werden durch die Betriebsstrategie des Hybridantriebes berücksichtigt.

In einer Ausgestaltung wird der über die Minimierungsgrößen eingestellte Betriebspunkt der Betriebsstrategie des Hybridantriebes kostenfunktionsoptimiert ausgeführt. Dabei werden die Wünsche des Fahrzeugbetreibers bzw. des Fahrzeugherstellers berücksichtigt. Da neben den Minimierungsgrößen die Verbrennungsmotorleistung, die Elektroantriebsleistung und die Leistung, welche durch den Energiespeicher aufgebracht werden kann, bekannt sind, stellt die Betriebsstrategie den Betriebspunkt des Hybridantriebes so ein, dass ein minimaler Kraftstoff- oder Stromverbrauch entsteht. Eine Kostenfunktionsoptimierung erfolgt immer dann, wenn der Betriebspunkt so eingestellt wird, dass der geringstmögliche Schadstoff- oder CO₂-Verbrauch vom Fahrzeug produziert und ausgestoßen wird. Die Minimierungsgrößen erlauben daher der Betriebsstrategie die größtmögliche Vielfalt an Kombinationsmöglichkeiten.

Erfindungsgemäß werden die durch die Zufuhr der Energie von der externen Energiequelle zum Fahrzeug bestimmten Minimierungsgrößen und/oder die Menge der geladenen Energie dem Fahrzeug von der externen Energiequelle übermittelt, damit die Betriebstrategie jederzeit bei der Bestimmung des Betriebspunktes über die Minimierungsgrößen verfügen kann.

Vorteilhafterweise erfolgt die Übermittlung der durch die Zufuhr der Energie von der externen Energiequelle zum Fahrzeug bestimmten Minimierungsgrößen und /oder der Menge der geladenen Energie von der externen Energiequelle zum Fahrzeug drahtlos.

In einer anderen Ausgestaltung der Erfindung erfolgt die Übermittlung der durch die Zufuhr der Energie von der externen Energiequelle zum Fahrzeug bestimmten Minimierungsgrößen und/oder der geladenen Energie von der externen Energiequelle zum Kraftfahrzeug kontaktbehaftet. Am einfachsten erfolgt dies während des Ladevorganges. Somit wird sichergestellt, dass diese für die Betriebsstrategie notwendigen Informationen auf jeden Fall dem Fahrzeug zugeführt werden und zur Bestimmung des Betriebspunktes zur Verfügung stehen.

In einer Weiterbildung werden die Minimierungsgrößen in Abhängigkeit zukünftiger Werte hinsichtlich Kraftstoffzufuhr und Energiezufuhr bestimmt. Unter zukünftigen Werten werden in diesem Zusammenhang die Kosten verstanden, die an verschiedenen Stationen entstehen, die für eine mögliche Energiezufuhr in Frage kommen. Dabei kann die Betriebsstrategie vom gewünschten Optimierungsgrad entscheiden, zu welchem Zeitpunkt an welcher Energieversorgungsstation welche Menge an Energie dem Fahrzeug zugeführt werden soll.

Vorteilhafterweise werden die Minimierungsgrößen von Kraftstoff und Energie dem Fahrzeug während der Ladung der Energie oder des Kraftstoffes mitgeteilt. Somit stehen die Minimierungsgrößen des zugeführten Kraftstoffes oder der zugeführten Energie dem Hybridantrieb zur Verarbeitung in der Betriebsstrategie sofort zur Verfügung. Die Minimierungsgrößen können aber auch abgespeichert und bei Bedarf in die Betrachtung der Betriebsstrategie einfließen.

Alternativ werden die Minimierungsgrößen von Kraftstoff oder Energie an das Fahrzeug während der Fahrt des Fahrzeuges übertragen, was den Vorteil hat, dass der Fahrer nicht nur darüber entscheiden kann, wann er Informationen über die Minimierungsgrößen erhalten möchte, sondern auch darüber entscheidet, welche Minimierungsgrößen übertragen werden sollen.

Eine weitere Weiterbildung der Erfindung besteht in einer Vorrichtung zum Betreiben eines Hybridantriebes eines Fahrzeuges, bei welchem ein Verbrennungsmotor und/oder mindestens ein elektrischer Antrieb das Fahrzeug antreiben, wobei der elektrische Antrieb von einem Energiespeicher mit Energie versorgt wird oder der elektrische Antrieb den Energiespeicher mit elektrischer Energie versorgt und ein Betriebspunkt des Hybridantriebes bei einer vorgegebenen Betriebsstrategie eingestellt wird, die von Minimierungsgrößen abhängt, welche den Kraftstoffverbrauch des Verbrennungsmotors und die von dem Energiespeicher zur Verfügung gestellte Energie berücksichtigen. Um die Betriebsstrategie des Hybridantriebes möglichst variabel zu gestalten, sind Mittel vorhanden, die dem Energiespeicher Energie aus einer externen Energiequelle zuführen, wobei die durch die Zufuhr der Energie aus der externen Energiequelle in den Energiespeicher zu berücksichtigenden Minimierungsgrößen in der Betriebsstrategie bewertet werden. Somit erfolgt eine Erweiterung der Energiekosten des Energiespeichers um die Kosten der Energie, die über ein öffentliches Netz in den Energiespeicher geladen werden. Die Energiekosten des Verbrennungsmotors und die Energiekosten des elektrischen Antriebes können somit einzeln oder in Kombination bei der Ermittlung des optimalen Betriebspunktes des Hybridantriebes in einer vorgegebenen Fahrsituation des Fahrzeuges berücksichtigt werden.

Erfindungsgemäß ist ein die Betriebsstrategie des Fahrzeuges bestimmendes Hybridantriebssteuergerät zur Einstellung des Betriebspunktes mit dem Verbrennungsmotor und dem wenigstens einem elektrischen Antrieb verbunden, wobei das Hybridantriebssteuergerät an eine erste Schnittstelle des Fahrzeuges zum Empfang der Minimierungsgrößen, die Energie betreffend, welche von der externen Energiequelle zum Fahrzeug übertragen wird, führt. Somit wird sichergestellt, dass das Hybridantriebssteuergerät, auf welchem die Betriebsstrategie läuft und welches mit Hilfe der Betriebsstrategie den für die jeweilige Fahrsituation des Fahrzeuges optimalen Betriebspunkt bestimmt, über die Minimierungsgrößen der zugeführten Energie informiert wird, da diese Kosten nur dem Betreiber des Stromversorgungsnetzes bekannt sind.

In einer Ausgestaltung ist die erste Schnittstelle als eine Mensch - Maschine -Schnittstelle ausgebildet. Dies hat den Vorteil, dass der Fahrzeugnutzer die erforderlichen Minimierungsgrößen in das Fahrzeug eingibt, wobei auf zusätzliche technische Mittel zur Übertragung der Informationen verzichtet werden kann, was sich als besonders kostengünstige Lösung anbietet.

In einer Weiterbildung ist die erste Schnittstelle als Steckanschluss für ein externes Kommunikationssystem ausgebildet. Ein solches externes Kommunikationssystem ist an oder in der Nähe der Energieversorgungseinrichtung angeordnet und liefert die mit der übertragenen Energie zusammenhängenden Minimierungsgrößen an das Fahrzeug zur weiteren Verarbeitung.

Vorteilhafterweise verbindet die erste Schnittstelle das externe Kommunikationssystem drahtlos mit dem Fahrzeug. Dabei können zur Informationsübertragung schon im Fahrzeug vorhandene drahtlose Schnittstellen genutzt werden, was eine Kostenreduzierung bei der Einführung des Systems zur Folge hat.

In einer Ausgestaltung erfolgt die drahtlose Verbindung zwischen dem externen Kommunikationssystem und dem Fahrzeug über eine Funkverbindung oder eine Infrarotverbindung oder eine induktive Verbindung oder eine Bilderkennungseinrichtung.

In einer Weiterbildung ist die Information über die durch die Zufuhr der Energie von der externen Energiequelle zum Fahrzeug bestimmten Minimierungsgrößen auf den Ladestrom aufmoduliert, der zur Übertragung der Energie von der externen Energiequelle zum Fahrzeug fließt. Mit dieser Maßnahme wird gewährleistet, dass die Information automatisch mit dem Vorgang der Energiezufuhr auf das Fahrzeug übertragen wird, ohne dass zusätzliche Handgriffe durch den Fahrer notwendig werden.

Zusätzlich überträgt eine zweite Schnittstelle eine Information über die Minimierungsgrößen des im Verbrennungsmotor des Fahrzeuges zu verwertenden Kraftstoffes. Die Informationen über die Minimierungsgrößen des verwendeten Kraftstoffes erhöhen nicht nur die Vielfalt der zur Verfügung stehenden Werte sondern verbessern auch die Genauigkeit der Berechnungen des Hybridantriebssteuergerätes bei der Bestimmung des optimierten Betriebspunktes.

Vorteilhafterweise ist die zweite Schnittstelle ein Steckkontakt, welcher bei der Aufnahme von Kraftstoff in die Kraftstoffzuführeinrichtung eingeführt ist, wodurch ein elektrisches Signal von der Kraftstoffzuführeinrichtung an das Fahrzeug weitergeleitet wird. Somit erfolgt die Informationsübertragung der Minimierungsgrößen des Kraftstoffes automatisch beim Tankvorgang.

In einer Weiterbildung ist die zweite Schnittstelle eine Funkschnittstelle, eine Infrarotschnittstelle, eine induktive Schnittstelle oder eine Bilderkennungseinrichtung. Durch die Verwendung von Schnittstellen, welche mit drahtlosen Übertragungsverfahren arbeiten, erhöht sich die Vielfalt der einsetzbaren Möglichkeiten.

In einer Ausgestaltung sind die erste und/oder die zweite Schnittstelle mit einem Fahrzeugsteuergerät verbunden, welches mit dem Hybridantriebssteuergerät kommuniziert. Da das Fahrzeugsteuergerät mit einem mobilen Telefonnetz oder einem Navigationssystem verbunden ist, die bereits drahtlose Schnittstellen zur Umgebung besitzen, können zusätzliche Schnittstellen entfallen, da die bereits vorhandene eine oder mehrere Schnittstellen für die Kommunikation mit dem externen Kommunikationssystem der Kraftstoff- bzw. Energielieferanten genutzt werden.

Vorteilhafterweise ist die externe Energiequelle ein öffentliches Stromnetz, welches über ein Onboard-Ladegerät mit der Hochvoltbatterie verbunden ist. Der Fahrzeugnutzer kann dabei entscheiden, aus welcher externen Energiequelle er den Strom für die Hochvoltbatterie entnehmen möchte, aus dem öffentlichen Netz oder einer so genannten Energietankstelle. Insbesondere die Entnahme der Energie aus einem öffentlichen Netz erhöht die Möglichkeiten, Energie nachzuladen.

Die Erfindung lässt zahlreiche Ausführungsformen zu. Eine davon soll anhand der in der Zeichnung dargestellten Figuren näher erläutert werden.

Es zeigt:
- Figur 1:: schematische Darstellung eines beispielhaften parallelen Plugln-Hybridantriebes
- Figur 2:: schematische Darstellung der Informationsübertragung der Minimierungsgrößen
- Figur 3:: schematischer Ablaufplan zur Durchführung des erfindungsgemäßen Verfahrens
- Figur 4:: schematische Darstellung der Übertragung von Energie aus dem öffentlichen Netz

Gleiche Merkmale sind mit gleichen Bezugszeichen gekennzeichnet.

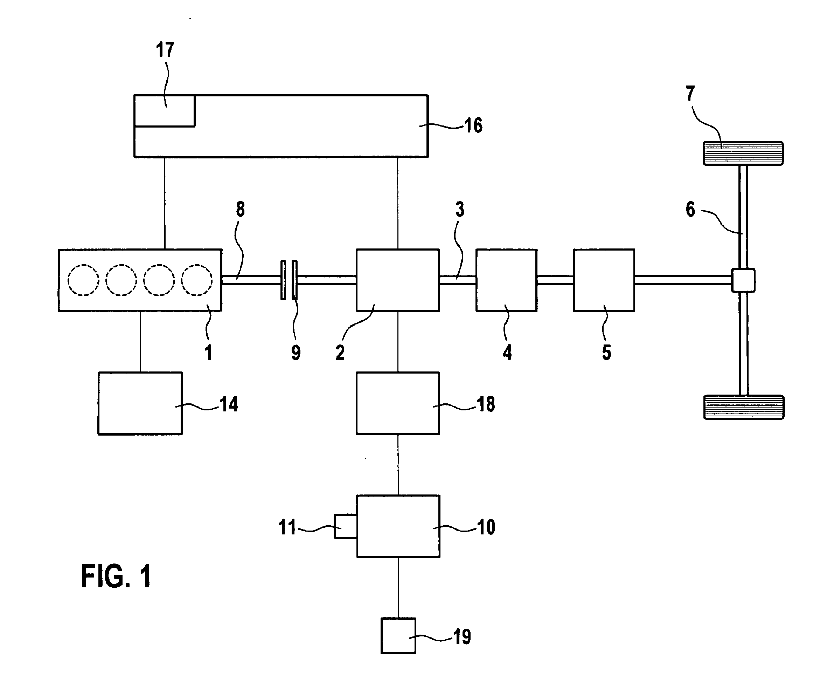

Figur 1 zeigt eine Prinzipdarstellung für ein Fahrzeug mit einem Plugln-Hybridantrieb. Der Plugln-Hybridantrieb wird von einem Verbrennungsmotor 1 als erste Antriebseinheit und einem Elektromotor 2 als zweite Antriebseinheit gebildet.

Der Verbrennungsmotor 1 ist über den Antriebsstrang 3 mit dem Getriebe 4 verbunden, welches wiederum über das Differential 5 auf die Radachse 6 zum Antrieb des Rades 7 führt.

Der Elektromotor 2 ist auf der Welle 8 des Verbrennungsmotors 1 angeordnet und führt somit ebenfalls auf den Antriebsstrang 3, der mit dem Getriebe 4 verbunden ist. Der Elektromotor 2 trägt damit zum Antrieb der Räder 7 und zum Gesamtdrehmoment des Fahrzeuges bei. Der Elektromotor 2 und der Verbrennungsmotor 1 sind dabei über eine Trennkupplung 9 miteinander verbunden. Diese Trennkupplung 9 erlaubt im geöffneten Zustand den Antrieb des Fahrzeuges allein über den Elektromotor 2, während im geschlossenen Zustand der Trennkupplung 9 sowohl der Verbrennungsmotor 1 als auch der Elektromotor 2 zum Antrieb des Fahrzeuges beitragen.

Darüber hinaus steht der Elektromotor 2 über eine Leistungselektronik 18 in Verbindung mit einer Hochvoltbatterie 10, die den Elektromotor 2 in dessen motorischem Betrieb mit elektrischer Energie versorgt. Alternativ wird die Hochvoltbatterie 10 im generatorischen Betrieb des Elektromotors 2 von diesem mit Energie versorgt. Das heißt, die Hochvoltbatterie 10 wird über den Elektromotor 2 aufgeladen.

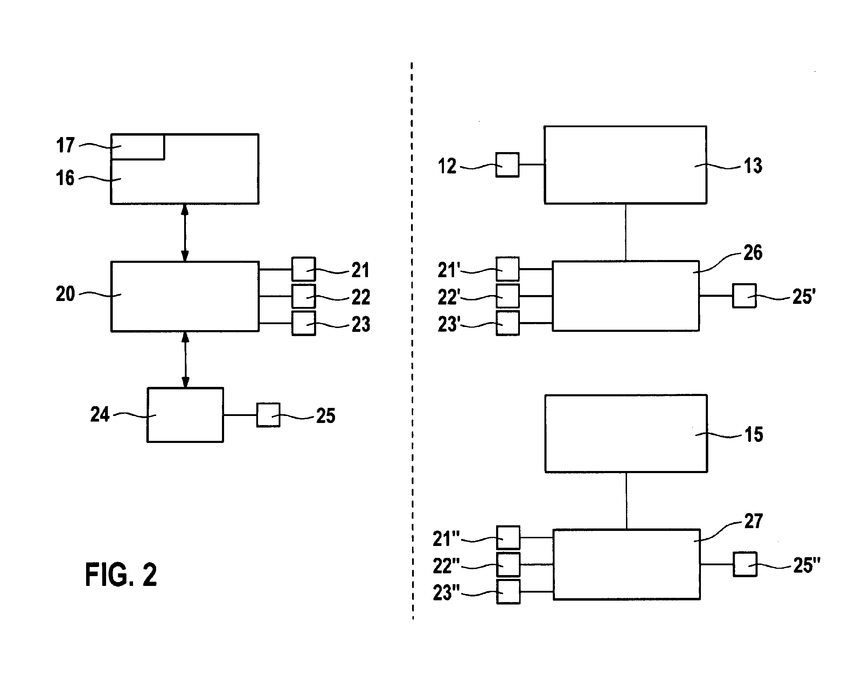

Bei einem Plugln-Hybridantrieb besitzt die Hochvoltbatterie 10 besonders große Speicherkapazitäten. Um diese Speicherkapazitäten zu nutzen, wird der Hochvoltspeicher 10 zusätzlich zum generatorischen Betrieb des Elektromotors 2 mit externer Energie versorgt. Zu diesem Zweck verfügt die Hochvoltbatterie 10 über eine Steckeinrichtung 11, an welche eine Steckvorrichtung 12 einer externen Energieversorgungseinrichtung 13 angeschlossen wird (Figur 2). Solche Energieversorgungseinrichtungen 13 sind analog den Tankstellen für Kraftstoff stationär an vorgegebenen Orten installiert und müssen von dem Fahrzeug zur Energieaufnahme angefahren werden. Alternativ kann auch über ein Onboard-Ladegerät aus dem öffentlichen Stromnetz geladen werden. Zur Energieaufnahme werden die Steckeinrichtung 11 des Fahrzeuges und die Steckvorrichtung 12 der Energieversorgungseinrichtung 13 in Wirkverbindung gebracht, wobei die Hochvoltbatterie 10 durch einen Stromfluß aus der Energieversorgungseinrichtung 13 aufgeladen wird.

Der Verbrennungsmotor 1 des Plugln-Hybridantriebes ist im bekannten Maße mit einem Kraftstofftank 14 verbunden, welcher eine Einfüllöffnung zur Aufnahme des Kraftstoffes von der Tankstelle 15 in das Fahrzeug aufweist.

Der Verbrennungsmotor 1 und der Elektromotor 2 sind mit einem Hybridantriebssteuergerät 16 verbunden und werden von diesem angesteuert. Das Hybridantriebssteuergerät 16 weist einen Speicher 17 auf, in welchem eine oder mehrere Betriebsstrategien zur Ansteuerung des Hybridantriebes abgespeichert sind. Darüber hinaus speichert der Speicher 17 auch die unterschiedlichsten Betriebsparameter des Fahrzeuges ab, welche während des Betriebes des Hybridantriebes mittels nicht weiter dargestellter Sensoren gemessen oder rechnerisch durch das Hybridantriebssteuergerät 16 ermittelt werden.

Mit Hilfe der bestimmten Betriebsparameter und der Betriebsstrategie stellt das Hybridantriebssteuergerät 16 des Fahrzeuges einen Betriebspunkt des Hybridantriebes ein. Neben den in Figur 1 erläuterten Komponenten des Hybridantriebes wie Verbrennungsmotor 1, Elektromotor 2, Getriebe 4 und Hochvoltbatterie 10 werden in die Energiebilanz des Hybridfahrzeuges auch die den Elektromotor 2 ansteuernde Leistungselektronik 18, die zwischen dem Elektromotor 2 und der Hochvoltbatterie 10 angeordnet ist, und mindestens ein Bordnetzverbraucher 19 berücksichtigt, der aus der Hochvoltbatterie 10 versorgt wird und mit dieser verbunden ist. Der Betriebspunkt kann dabei, je nach Forderung des Fahrzeugherstellers oder Nutzers energieoptimiert oder kostenoptimiert eingestellt werden. Variable Parameter sind hierbei beispielsweise die Leistung des Verbrennungsmotors 1 und des Elektromotors 2 und die Übersetzung des Getriebes 4. Werden zwei Elektromotoren 2 eingesetzt, wird die Summe der von den beiden Elektromotoren aufgebrachten Leistungen berücksichtigt. Weitere Parameter ergeben sich dann aus dem vom Fahrer des Fahrzeuges vorgegebenen Wunschabtriebsmoment, welches der Fahrer über ein Fahrpedal einstellt, der Fahrzeuggeschwindigkeit, dem Ladezustand der Hochvoltbatterie 10 und der Bordnetzverbraucherleistung.

Um nun energieoptimal fahren zu können, das heißt, entscheiden zu können, wie viel Energie der Hochvoltbatterie 10 und dem Verbrennungsmotor 1 entnommen werden soll, benötigt die Betriebsstrategie eine Kostenfunktion, bei der die Kosten der Energie der Hochvoltbatterie 10, die Kosten bei der Erzeugung der Energie mit dem Verbrennungsmotor 1 und die Kosten der Ladung der Energie von der externen Energieversorgungseinrichtung 13 berücksichtigt werden. Unter diesen Kosten versteht man Minimierungsgrößen, wie CO₂-Äquivalent, Schadstoffäquivalent, Energieäquivalent, aber auch Geld für die entnommene Energie. Die rekuperierte Energie, also die Energie, welche entsteht, wenn der Elektromotor 2 im generatorischen Betrieb betrieben wird und die Hochvoltbatterie auflädt, wird als kostenlos betrachtet.

Da die Kosten für die externe Energie und den Kraftstoff nur den Betreibern der Energieversorgungseinrichtung 13 bzw. der Tankstelle 15 bekannt sind, müssen sie dem Hybridantriebssteuergerät 16 bekannt gemacht werden, damit dieses die Minimierungsgrößen bei der Berechnung des Betriebspunktes des Hybridantriebes durch die Betriebsstrategie berücksichtigen kann. Wie aus Figur 2 ersichtlich, ist dazu das Hybridantriebssteuergerät 16 mit einem Fahrzeugsteuergerät 20 verbunden, welches eine Mensch-Maschine-Schnittstelle 21, eine Bluetooth- Schnittstelle 22 und eine Handy-Schnittstelle 23 aufweist. Darüber hinaus ist das Fahrzeugsteuergerät 20 mit einem Navigationsgerät 24 verbunden, welches eine Funkschnittstelle 25 besitzt. In vielen Fällen gehören solche Schnittstellen zur komfortablen Ausrüstung eines Fahrzeuges und müssen nicht extra nachgerüstet werden.

Im einfachsten Fall wird bei der Aufnahme von externer Energie oder Kraftstoff der Fahrer die für die Berechnung des Betriebspunktes notwendigen Minimierungsgrößen per Hand über die Mensch-Maschine-Schnittstelle 21, die vorzugsweise als Tastatur ausgebildet ist, eingeben.

Komfortabler ist aber eine automatische drahtlose Übertragung der Kosten, wozu je nach Entfernung des Fahrzeuges von der Energieversorgungseinrichtung 13 die passende Schnittstelle 22, 23, 25 genutzt wird.

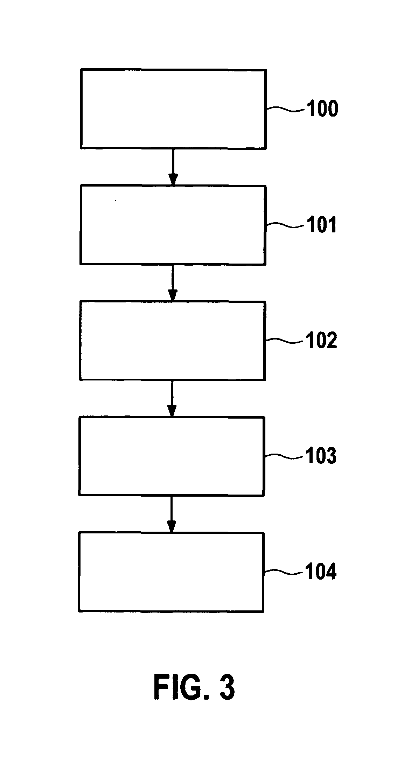

Anhand von Figur 3 soll ein Beispiel für das erfindungsgemäße Verfahren erläutert werden. Im Block 100 wird die Hochvoltbatterie 10 im Stillstand des Fahrzeuges durch Zufuhr von externer Energie aus der Energieversorgungseinrichtung 13 wieder aufgeladen und die Menge der geladenen Energie registriert. Anstelle der Menge der geladenen Energie kann alternativ aber auch der Ladezustand der Hochvoltbatterie 10 registriert werden. Gleichzeitig wird über die Bluetooth-Schnittstelle 23 des Fahrzeuges eine Verbindung mit dem Informationsnetz 26 der Energieversorgungseinrichtung 13 aufgenommen, welches über eine äquivalente Schnittstelle 21', 22', 23', 25' (Figur 2) verfügt und wodurch die gewünschten Minimierungsgrößen (Kosten) über das Fahrzeugsteuergerät 20 an das Hybridantriebssteuergerät 16 übertragen werden, welches die Minimierungsgrößen in dem Speicher 17 ablegt.

Im Block 101 werden diese Kosten im nächsten Schritt der Betriebsstrategie bei der Bestimmung des Betriebspunkt des Hybridantriebes mit berücksichtigt.

Anschließend fährt das Fahrzeug im Schritt 102 weiter, wobei die Minimierungsgrößen aus dem sich verändernden Energieverbrauch des Elektromotors 2 und des Verbrennungsmotors 1 und der Energiebilanz der Hochvoltbatterie 10 in vorgegebenen Abständen bei der Bestimmung des Betriebspunktes des Hybridantriebes berücksichtigt werden.

Im Schritt 103 werden die Minimierungsgrößen für die externe Energie bzw. den Kraftstoff an Energieversorgungseinrichungen 13 und Tankstellen 15 während der Fahrt des Fahrzeuges ständig abgefragt, was über die Handy-Schnittstelle 23 oder die Funkschnittstelle 25 erfolgt. Damit kann im Vornherein festgelegt werden welche Tankstelle 15 bzw. Energieversorgungseinrichtung 13 die günstigsten Kostenkonditionen für die vom Hybridantrieb benötigte Energie- CO₂- oder Schadstoffbilanz aufweist.

Zur Aufnahme von Kraftstoff wird im Schritt 104 eine entsprechend im Voraus ausgewählte Tankstelle 15 angefahren und der Kraftstofftank 14 mit Kraftstoff nachgefüllt. Dabei wird dem Fahrzeugsteuergerät 20 während des Tankens die Informationen über die Menge und die Kosten des aufgenommenen Kraftstoffes von einer Schnittstelle 21 ", 22", 23", 25" des Netzwerkes 27 des Ölversorgungsunternehmens, beispielsweise des Internets, über die Handy- Schnittstelle 23 des Fahrzeuges übertragen. Das Fahrzeugsteuergerät 20 übermittelt diese Informationen an das Hybridantriebssteuergerät 16, welches diese weiter verarbeitet.

Das erfindungsgemäße Verfahren ermöglicht auf Grund der Vielfalt der Abfragemöglichkeiten der Minimierungsgrößen von Energieversorgungseinrichtungen 13 und Tankstelle 15 eine flexible und vorausschauende Bestimmung eines energieoptimierten Betriebspunktes des Hybridantriebes innerhalb einer Betriebsstrategie.

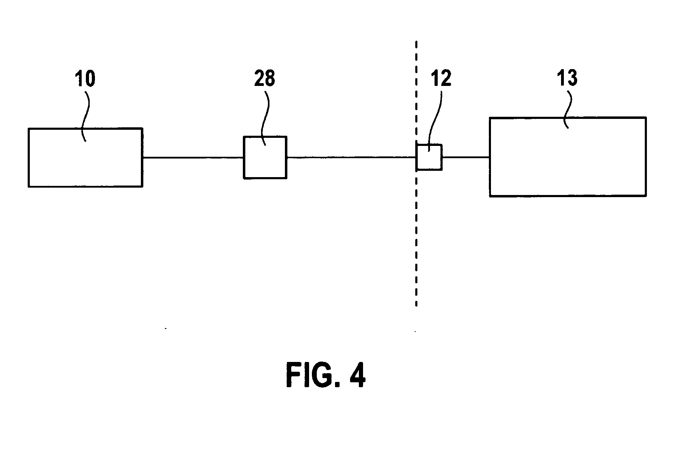

Das erfindungsgemäße Verfahren funktioniert auch, wenn die für die Hochvoltbatterie 10 notwendige Energie aus dem öffentlichen Stromnetz als externe Energiequelle entnommen wird. Wie in Figur 4 dargestellt, wird ein im Fahrzeug installiertes Onboard-Ladegerät 28 mit der Steckeinrichtung 12 der externen Energiequelle, also dem öffentlichen Netz verbunden. Das Onboard-Ladegerät 28 führt andererseits an die Hochvoltbatterie 10 und überträgt die Energie aus dem öffentlichen Netz 13 in die Hochvoltbatterie 10.

## Patentansprüche

1. Verfahren zum Betreiben eines Hybridantriebes eines Fahrzeuges, bei welchem ein Verbrennungsmotor (1) und/oder mindestens eine elektrische Maschine (2) das Fahrzeug antreiben, wobei die elektrische Maschine (2) von einem Energiespeicher (10) mit Energie versorgt wird oder die elektrischen Maschine (2) den Energiespeicher (10) mit elektrischer Energie versorgt und ein Betriebspunkt des Hybridantriebes bei einer vorgegebenen Betriebsstrategie eingestellt wird, die von Minimierungsgrößen abhängt, welche den Kraftstoffverbrauch des Verbrennungsmotors (1) und die von dem Energiespeicher (10) zur Verfügung gestellte Energie berücksichtigen, wobei dem Energiespeicher (10) Energie aus einer externen Energiequelle (13) zugeführt wird, wobei die durch die Zufuhr der Energie aus der externen Energiequelle (13) in den Energiespeicher (10) zu berücksichtigenden Minimierungsgrößen in der Betriebsstrategie bewertet werden, **dadurch gekennzeichnet, dass** die durch die Zufuhr der Energie von der externen Energiequelle (13) zum Fahrzeug bestimmten Minimierungsgrößen und/oder die Menge der geladenen Energie dem Fahrzeug von der externen Energiequelle (13) übermittelt werden.

2. Verfahren nach Anspruch 1, **dadurch gekennzeichnet, dass** die Minimierungsgrößen ein Energieäquivalent und/oder ein CO₂-Äquivalent und/oder ein Schadstoffäquivalent und/oder eine monetäre Einheit berücksichtigen.

3. Verfahren nach Anspruch 1 oder 2, **dadurch gekennzeichnet, dass** der über die Minimierungsgrößen eingestellte Betriebspunkt der Betriebsstrategie des Hybridantriebes kostenfunktionsoptimiert ausgeführt wird.

4. Verfahren nach Anspruch 1, **dadurch gekennzeichnet, dass** die Übermittlung der durch die Zufuhr der Energie von der externen Energiequelle (13) zum Fahrzeug bestimmten Minimierungsgrößen und /oder der Menge der geladenen Energie von der externen Energiequelle (13) zum Fahrzeug drahtlos erfolgt.

5. Verfahren nach Anspruch 1, **dadurch gekennzeichnet, dass** die Übermittlung der durch die Zufuhr der Energie von der externen Energiequelle (13) zum Fahrzeug bestimmten Minimierungsgrößen und/oder der Menge der geladenen Energie von der externen Energiequelle (13) zum Kraftfahrzeug kontaktbehaftet erfolgt.

6. Verfahren nach mindestens einem der vorhergehenden Ansprüche, **dadurch gekennzeichnet, dass** die Minimierungsgrößen in Abhängigkeit zukünftiger Werte hinsichtlich Kraftstoffzufuhr und Energiezufuhr bestimmt werden.

7. Verfahren nach mindestens einem der vorhergehenden Ansprüche, **dadurch gekennzeichnet, dass** die Minimierungsgrößen von Kraftstoff und Energie dem Fahrzeug während der Ladung der Energie oder des Kraftstoffes mitgeteilt werden.

8. Verfahren nach mindestens einem der vorhergehenden Ansprüche 1 bis 6, **dadurch gekennzeichnet, dass** die Minimierungsgrößen von Kraftstoff oder Energie an das Fahrzeug während der Fahrt des Fahrzeuges übertragen werden.

9. Vorrichtung zum Betreiben eines Hybridantriebes eines Fahrzeuges, bei welchem ein Verbrennungsmotor (1) und/oder mindestens eine elektrische Maschine (2) das Fahrzeug antreiben und die elektrische Maschine (2) von einem Energiespeicher (10) mit Energie versorgt wird oder die elektrische Maschine den Energiespeicher (10) mit elektrischer Energie versorgt und ein Betriebspunkt des Hybridantriebes bei einer vorgegebenen Betriebsstrategie eingestellt wird, die von Minimierungsgrößen abhängt, welche den Kraftstoffverbrauch des Verbrennungsmotors (1) und die von dem Energiespeicher (10) zur Verfügung gestellte Energie berücksichtigen, wobei Mittel (11, 20) vorhanden sind, die dem Energiespeicher Energie aus einer externen Energiequelle (13) zuführen, wobei die durch die Zufuhr der Energie aus der externen Energiequelle (13) in den Energiespeicher zu berücksichtigenden Minimierungsgrößen in der Betriebsstrategie bewertet werden, **dadurch gekennzeichnet, dass** ein die Betriebsstrategie des Fahrzeuges bestimmendes Hybridantriebssteuergerät (16) zur Einstellung des Betriebspunktes mit dem Verbrennungsmotor (1) und der wenigstens einen elektrischen Maschine (2) verbunden ist, wobei das Hybridantriebssteuergerät (16) an eine erste Schnittstelle (21, 22, 23, 25) des Fahrzeuges zum Empfang der Minimierungsgrößen, der von der externen Energiequelle (13) dem Fahrzeug zugeführten Energie, führt.

10. Vorrichtung nach Anspruch 9, **dadurch gekennzeichnet, dass** die erste Schnittstelle (21) als eine Mensch - Maschine -Schnittstelle ausgebildet ist.

11. Vorrichtung nach Anspruch 9, **dadurch gekennzeichnet, dass** die erste Schnittstelle als Steckanschluss für ein externes Kommunikationssystem (26) ausgebildet ist.

12. Vorrichtung nach Anspruch 11, **dadurch gekennzeichnet, dass** Informationen über die durch die Zufuhr der Energie von der externen Energiequelle (13) zum Fahrzeug bestimmten Minimierungsgrößen auf den Ladestrom aufmoduliert sind, der bei der Übertragung der Energie von der externen Energiequelle (13) zum Fahrzeug fließt.

13. Vorrichtung nach Anspruch 9, **dadurch gekennzeichnet, dass** die erste Schnittstelle (22, 23, 25) das externe Kommunikationssystem (26) drahtlos mit dem Fahrzeug verbindet.

14. Vorrichtung nach Anspruch 13, **dadurch gekennzeichnet, dass** die drahtlose Verbindung zwischen dem externen Kommunikationssystem (26) und dem Fahrzeug über eine Funkverbindung oder eine Infrarotverbindung oder eine induktive Verbindung oder eine Bilderkennungseinrichtung erfolgt.

15. Vorrichtung nach Anspruch 9, **dadurch gekennzeichnet, dass** eine zweite Schnittstelle (21, 22, 23, 25) eine Information über die Minimierungsgrößen des im Verbrennungsmotor des Fahrzeuges verwerteten Kraftstoffes überträgt.

16. Vorrichtung nach Anspruch 15, **dadurch gekennzeichnet, dass** die zweite Schnittstelle ein Steckkontakt ist, welcher bei der Aufnahme von Kraftstoff in die Kraftstoffzuführeinrichtung eingeführt ist, wodurch ein elektrisches Signal von der Kraftstoffzuführeinrichtung (15) an das Fahrzeug weitergeleitet wird.

17. Vorrichtung nach Anspruch 15, **dadurch gekennzeichnet, dass** die zweite Schnittstelle eine Funkschnittstelle, eine Infrarotschnittstelle, eine induktive Schnittstelle oder eine Bilderkennungseinrichtung ist.

18. Vorrichtung nach mindestens einem der vorhergehenden Ansprüche 12, 13 und 15, **dadurch gekennzeichnet, dass** die erste und/oder die zweite Schnittstelle (21, 22, 23, 25) an einem Fahrzeugsteuergerät (20) angeordnet sind, welches mit dem Hybridantriebssteuergerät (16) verbunden ist.

19. Vorrichtung nach Anspruch 9, **dadurch gekennzeichnet, dass** die externe Energiequelle 13 ein öffentliches Stromnetz darstellt, welches über ein Onboard-Ladegerät (28) mit der Hochvoltbatterie (10) verbunden ist.

## Claims

1. Method for operating a hybrid drive of a vehicle, in which an internal combustion engine (1) and/or at least one electrical machine (2) drive/drives the vehicle, wherein the electrical machine (2) is supplied with energy by an energy storage means (10) or the electrical machine (2) supplies the energy storage means (10) with electrical energy and an operating point of the hybrid drive is set in the case of a prespecified operating strategy which depends on minimization variables which take into account the fuel consumption of the internal combustion engine (1) and the energy which is provided by the energy storage means (10), wherein energy is supplied to the energy storage means (10) from an external energy source (13), wherein the minimization variables which are to be taken into account by the supply of energy from the external energy source (13) to the energy storage means (10) are evaluated in the operating strategy, **characterized in that** the minimization variables which are determined by the supply of energy from the external energy source (13) to the vehicle and/or the quantity of charged energy are/is transmitted to the vehicle by the external energy source (13).

2. Method according to Claim 1, **characterized in that** the minimization variables take into account an energy equivalent and/or a CO₂ equivalent and/or a pollutant equivalent and/or a monetary unit.

3. Method according to Claim 1 or 2, **characterized in that** the operating point, which is set by means of the minimization variables, of the operating strategy of the hybrid drive is implemented in a manner optimized in terms of the cost function.

4. Method according to Claim 1, **characterized in that** the minimization variables which are determined by the supply of energy from the external energy source (13) to the vehicle and/or the quantity of charged energy are/is transmitted from the external energy source (13) to the vehicle in a wireless manner.

5. Method according to Claim 1, **characterized in that** the minimization variables which are determined by the supply of energy by the external energy source (13) to the vehicle and/or the quantity of charged energy are/is transmitted from the external energy source (13) to the vehicle with contact.

6. Method according to at least one of the preceding claims, **characterized in that** the minimization variables are determined as a function of future values in respect of fuel supply and energy supply.

7. Method according to at least one of the preceding claims, **characterized in that** the vehicle is informed of the minimization variables of fuel and energy while the energy or the fuel is being charged.

8. Method according to at least one of the preceding Claims 1 to 6, **characterized in that** the minimization variables of fuel or energy are transmitted to the vehicle while the vehicle is being driven.

9. Apparatus for operating a hybrid drive of a vehicle, in which an internal combustion engine (1) and/or at least one electrical machine (2) drive/drives the vehicle and the electrical machine (2) is supplied with energy by an energy storage means (10) or the electrical machine supplies the energy storage means (10) with electrical energy and an operating point of the hybrid drive is set in the case of a prespecified operating strategy which depends on minimization variables which take into account the fuel consumption of the internal combustion engine (1) and the energy which is provided by the energy storage means (10), wherein means (11, 20) are present which supply energy to the energy storage means from an external energy source (13), wherein the minimization variables which are to be taken into account by the supply of energy from the external energy source (13) to the energy storage means are evaluated in the operating strategy, **characterized in that** a hybrid drive controller (16), which determines the operating strategy of the vehicle, for setting the operating point is connected to the internal combustion engine (1) and the at least one electrical machine (2), wherein the hybrid drive controller (16) is connected to a first interface (21, 22, 23, 25) of the vehicle to receive the minimization variables of the energy which is supplied by the external energy source (13) to the vehicle.

10. Apparatus according to Claim 9, **characterized in that** the first interface (21) is in the form of a human/machine interface.

11. Apparatus according to Claim 9, **characterized in that** the first interface is in the form of a plug connection for an external communications system (26).

12. Apparatus according to Claim 11, **characterized in that** information about the minimization variables which are determined by the supply of energy from the external energy source (13) to the vehicle is modulated onto the charging current which flows when energy is transmitted from the external energy source (13) to the vehicle.

13. Apparatus according to Claim 9, **characterized in that** the first interface (22, 23, 25) connects the external communications system (26) to the vehicle in a wireless manner.

14. Apparatus according to Claim 13, **characterized in that** the wireless connection between the external communications system (26) and the vehicle is established by means of a radio connection or an infrared connection or an inductive connection or an image recognition device.

15. Apparatus according to Claim 9, **characterized in that** a second interface (21, 22, 23, 25) transmits an item of information about the minimization variables of the fuel used in the internal combustion engine of the vehicle.

16. Apparatus according to Claim 15, **characterized in that** the second interface is a plug contact which is inserted into the fuel supply device when fuel is received, as a result of which an electrical signal is forwarded to the vehicle by the fuel supply device (15).

17. Apparatus according to Claim 15, **characterized in that** the second interface is a radio interface, an infrared interface, an inductive interface or an image recognition device.

18. Apparatus according to at least one of the preceding Claims 12, 13 and 15, **characterized in that** the first and/or the second interface (21, 22, 23, 25) are/is arranged on a vehicle controller (20) which is connected to the hybrid drive controller (16).

19. Apparatus according to Claim 9, **characterized in that** the external energy source (13) represents a public power supply system which is connected to the high-voltage battery (10) by means of an on-board charger (28).

## Revendications

1. Procédé pour faire fonctionner un entraînement hybride d'un véhicule, dans lequel un moteur à combustion interne (1) et/ou au moins une machine électrique (2) entraînent le véhicule, la machine électrique (2) étant alimentée en énergie par un accumulateur d'énergie (10) ou la machine électrique (2) alimentant l'accumulateur d'énergie (10) en énergie électrique et un point de fonctionnement de l'entraînement hybride étant ajusté dans le cas d'une stratégie de fonctionnement prédéfinie, qui dépend de grandeurs de minimisation qui tiennent compte de la consommation de carburant du moteur à combustion interne (1) et de l'énergie mise à disposition par l'accumulateur d'énergie (10), l'accumulateur d'énergie (10) étant alimenté en énergie provenant d'une source d'énergie externe (13), les grandeurs de minimisation à prendre en compte par le biais de l'alimentation en énergie depuis la source d'énergie externe (13) dans l'accumulateur d'énergie (10) étant évaluées dans la stratégie de fonctionnement, **caractérisé en ce que** les grandeurs de minimisation déterminées par le biais de l'apport d'énergie depuis la source d'énergie externe (13) au véhicule et/ou la quantité d'énergie chargée étant communiquées au véhicule par la source d'énergie externe (13).

2. Procédé selon la revendication 1, **caractérisé en ce que** les grandeurs de minimisation tiennent compte d'un équivalent en énergie et/ou d'un équivalent en CO₂ et/ou d'un équivalent en substances nocives et/ou d'une unité monétaire.

3. Procédé selon la revendication 1 ou 2, **caractérisé en ce que** le point de fonctionnement de la stratégie de fonctionnement de l'entraînement hybride ajusté par le biais des grandeurs de minimisation est réalisé de manière optimisée en termes de fonction de coût.

4. Procédé selon la revendication 1, **caractérisé en ce que** le transfert des grandeurs de minimisation déterminées par le biais de l'apport d'énergie depuis la source d'énergie externe (13) au véhicule et/ou de la quantité de l'énergie chargée par la source d'énergie externe (13) au véhicule a lieu sans fil.

5. Procédé selon la revendication 1, **caractérisé en ce que** le transfert des grandeurs de minimisation déterminées par le biais de l'apport d'énergie depuis la source d'énergie externe (13) au véhicule et/ou de la quantité de l'énergie chargée par la source d'énergie externe (13) au véhicule automobile a lieu par contact.

6. Procédé selon au moins l'une quelconque des revendications précédentes, **caractérisé en ce que** les grandeurs de minimisation sont déterminées en fonction de valeurs futures concernant l'alimentation en carburant et l'alimentation en énergie.

7. Procédé selon au moins l'une quelconque des revendications précédentes, **caractérisé en ce que** les grandeurs de minimisation du carburant et de l'énergie sont communiquées au véhicule pendant le chargement de l'énergie ou du carburant.

8. Procédé selon au moins l'une quelconque des revendications précédentes 1 à 6, **caractérisé en ce que** les grandeurs de minimisation du carburant ou de l'énergie sont transmises au véhicule pendant la conduite du véhicule.

9. Dispositif pour faire fonctionner un entraînement hybride d'un véhicule, dans lequel un moteur à combustion interne (1) et/ou au moins une machine électrique (2) entraînent le véhicule et la machine électrique (2) est alimentée en énergie par un accumulateur d'énergie (10) ou la machine électrique alimente l'accumulateur d'énergie (10) en énergie, et un point de fonctionnement de l'entraînement hybride est ajusté dans le cas d'une stratégie de fonctionnement prédéfinie, qui dépend de grandeurs de minimisation qui tiennent compte de la consommation de carburant du moteur à combustion interne (1) et de l'énergie fournie par l'accumulateur d'énergie (10), des moyens (11, 20) étant prévus, lesquels acheminent à l'accumulateur d'énergie de l'énergie provenant d'une source externe (13), les grandeurs de minimisation à prendre en compte par le biais de l'apport d'énergie provenant de la source d'énergie externe (13) dans l'accumulateur d'énergie étant analysées dans la stratégie de fonctionnement, **caractérisé en ce qu'**un appareil de commande de l'entraînement hybride (16) déterminant la stratégie de fonctionnement du véhicule pour l'ajustement du point de fonctionnement est connecté au moteur à combustion interne (1) et à l'au moins une machine électrique (2), l'appareil de commande de l'entraînement hybride (16) étant raccordé à une première interface (21, 22, 23, 25) du véhicule pour la réception des grandeurs de minimisation de l'énergie acheminée de la source d'énergie externe (13) au véhicule.

10. Dispositif selon la revendication 9, **caractérisé en ce que** la première interface (21) est réalisée sous forme d'interface homme-machine.

11. Dispositif selon la revendication 9, **caractérisé en ce que** la première interface est réalisée sous forme de raccord enfichable pour un système de communication externe (26).

12. Dispositif selon la revendication 11, **caractérisé en ce que** des informations sur les grandeurs de minimisation déterminées par le biais de l'apport d'énergie depuis la source d'énergie externe (13) au véhicule sont modulées en fonction du courant de charge, qui s'écoule lors du transfert d'énergie depuis la source d'énergie externe (13) jusqu'au véhicule.

13. Dispositif selon la revendication 9, **caractérisé en ce que** la première interface (22, 23, 35) relie sans fil le système de communication externe (26) au véhicule.

14. Dispositif selon la revendication 13, **caractérisé en ce que** la connexion sans fil entre le système de communication externe (26) et le véhicule s'effectue par le biais d'une liaison radio ou d'une liaison infrarouge ou d'une liaison inductive ou d'un dispositif de reconnaissance d'image.

15. Dispositif selon la revendication 9, **caractérisé en ce qu'**une deuxième interface (21, 22, 24, 25) transmet une information par le biais des grandeurs de minimisation du carburant utilisé dans le moteur à combustion interne du véhicule.

16. Dispositif selon la revendication 15, **caractérisé en ce que** la deuxième interface est un contact enfichable qui est introduit lors de la réception de carburant dans le dispositif d'alimentation en carburant, de sorte qu'un signal électrique soit transmis depuis le dispositif d'alimentation en carburant (15) au véhicule.

17. Dispositif selon la revendication 15, **caractérisé en ce que** la deuxième interface est une interface radio, une interface infrarouge, une interface inductive ou un dispositif de reconnaissance d'image.

18. Dispositif selon au moins l'une quelconque des revendications précédentes 12, 13 et 15, **caractérisé en ce que** la première et/ou la deuxième interface (21, 22, 23, 25) sont disposées sur un appareil de commande de véhicule (20), qui est connecté à l'appareil de commande d'entraînement hybride (16).

19. Dispositif selon la revendication 9, **caractérisé en ce que** la source d'énergie externe (13) constitue un réseau électrique public qui est connecté à la batterie haute tension (10) par le biais d'un appareil de charge embarqué (28).
